# EUROPEAN PATENT SPECIFICATION

(11) **EP 0 895 613 B1**
(45) Date of publication and mention of the grant of the patent: **23.04.2003**
(21) Application number: 97915049.7
(22) Date of filing: 14.03.1997
(51) Int. Cl.: G03B 3/04, H04N 1/21, H04N 5/225, G03B 13/32, G02B 7/28

(54) **Electronic still camera having mechanically movable CCD to affect focus**
Digitalkamera mit mechanisch verstellbarem CCD-Sensor zur Beeinflussung der Fokussierung
Appareil photo electronique comprenant un capteur CCD qui est mechaniquement adjustable pour affecter le mis-au-point

(30) Priority: 14.03.1996 US 615142
(43) Date of publication of application: 10.02.1999
(73) Proprietor: POLAROID CORPORATION, Cambridge, Massachusetts 02139-3589 (US)
(72) Inventor: ERNEST, Paul, W., Lynnfield, MA 01940 (US); OSTROWSKI, John, C., Maynard, MA 01754 (US); RUSSO, Massimo, A., Brookline, MA 02146 (US)
(74) Representative: Koch, Günther, Dipl.-Ing.
(86) International application number: PCT/US97/03946
(87) International publication number: WO 97/034194

(56) References cited:
- DE-A- 3 424 014
- US-A- 4 490 814
- PATENT ABSTRACTS OF JAPAN vol. 012, no. 449 (E-686), 25 November 1988 & JP 63 177663 A (MATSUSHITA ELECTRIC IND CO LTD), 21 July 1988,
- PATENT ABSTRACTS OF JAPAN vol. 096, no. 005, 31 May 1996 & JP 08 015599 A (KYOCERA CORP), 19 January 1996,
- PATENT ABSTRACTS OF JAPAN vol. 010, no. 240 (E-429), 19 August 1986 & JP 61 070866 A (CANON INC), 11 April 1986,
- PATENT ABSTRACTS OF JAPAN vol. 012, no. 003 (E-570), 7 January 1988 & JP 62 163476 A (MATSUSHITA ELECTRIC IND CO LTD), 20 July 1987,
- PATENT ABSTRACTS OF JAPAN vol. 014, no. 376 (P-1092), 14 August 1990 & JP 02 141734 A (KONICA CORP), 31 May 1990,

## Description

### Background of the Invention

The present invention relates generally to digital imaging cameras and, more particularly, to electronic still cameras having a mechanically adjustable sensor for adjusting image focus.

Conventional imaging cameras have long adjusted focus by physically moving a lens in an optical system of the conventional camera as for distance shown in JP 02 191 734A. The movement of the lens can be automatic movement driven by a motor, or manual movement under user control. In either case, the lens itself is mechanically moved relative to a film plane. It is well known in the art that as an object comes in from an infinite distance with respect to a lens, a focal plane on which the lens forms a sharp image when correctly focused is moved away from the lens. Thus, to correctly focus the image of an object onto a film plane, the lens is mechanically moved away from the film plane. Analogously, electronic still cameras have provided a similar function where, instead of a film in the film plane, there is an electronic sensor, such as a charge-coupled device (CCD), positioned in the film plane. A problem with this type of focusing system is that lenses are often interchangeable on a camera, thus making a lens system that is individually moveable and interchangeable very costly. In addition, each lens system that is interchanged onto the camera must have the same functionality, i.e., each must be user adjustable or adapted to be driven by a motor.

Documents JP 63 177 663A, DE-3 424 014 A1 or JP 08 015 599A show cameras where the CCD or focal plane is moved with respect to a fixed lens.

### Summary

Disclosed is an invention according to claims 1, 11 or 16. Further modifications set forth in the dependent claims. The mechanically adjustable sensor is useful with electronic still cameras having at least one lens for focusing image-bearing light reflected from a subject along an optical path onto the electronic sensor. The electronic sensor then converts the image-bearing light into electronic signals representative of the subject.

The electronic still camera comprises an adjustment means which moves the sensor along the optical path relative to the at least one lens such to focus an image of the subject. In the preferred embodiment, the adjustment means is a lead screw driven by a stepper motor. The stepper motor rotates the lead screw such that the lead screw moves in and out relative to the lens, and substantially parallel to the optical path. The lead screw mechanically contacts the sensor so as to push the sensor forward toward the lens or to relieve pressure on the sensor such that spring action can push the sensor back away from the lens. In this way, the sensor is being moved relative to the lens thus focusing the image in the electronic still camera.

In further aspects, the invention provides methods in accord with the apparatus described above. The aforementioned and other aspects of the invention are evident in the drawings and in the description that follows.

### Brief Description of the Drawings

The invention may be more fully understood from the following description, when read together with the accompanying drawings in which:
Fig. 1 shows a ray trace diagram with a cross-section of a lens sensor combination in accordance with the invention;

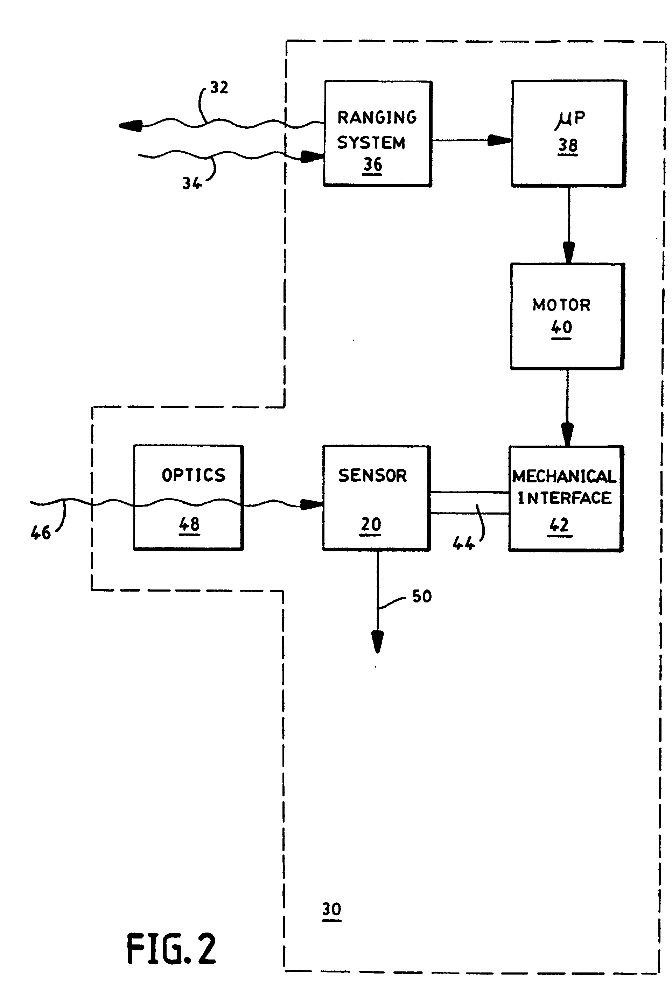

Fig. 2 shows a block diagram of an electronic still camera using the invention of Fig. 1;
Fig. 3A shows a mechanical drawing of an electronic still camera using the system described in Fig. 2;
Fig. 3B shows a cross-sectional view of the electronic still camera of Fig. 3A;
Fig. 4 shows a mechanical drawing of an alternative embodiment of an electronic still camera using the system described in Fig. 2; and
Fig. 5 shows a mechanical drawing of an alternative embodiment of an electronic still camera using the system described in Fig. 2.

### Detailed Description

While the present invention retains utility within a wide variety of photographic devices and may be embodied in several different forms, it is advantageously employed in connection with an electronic still camera. Though this is the form of the preferred embodiment and will be described as such, this embodiment should be considered illustrative and not restrictive.

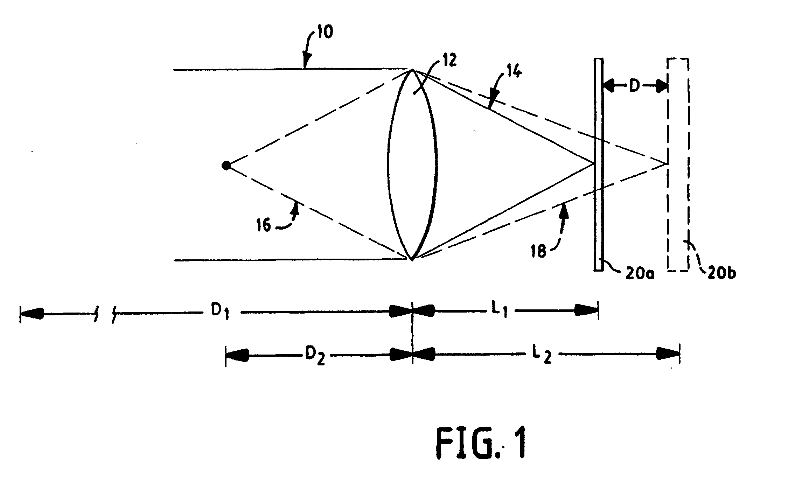

Fig. 1 shows two ray traces, where the solid line 10 represents a ray trace of light reflected from an object located a distance D₁ from a lens 12. In the example provided, D1 is infinite. Since the object is located at infinity, incident rays 10 are substantially parallel to the lens axis such that as rays 10 pass through lens 12, focused rays 14 intersect at a focal point which is a distance L₁ from lens 12. Since the object being imaged is at infinity, distance L₁ is defined as the focal length of lens 12.

As the object is moved in from infinity relative to lens 12, the reflected light rays reflected from the object ceased to be parallel. Image rays 16, depicted in Fig. I as dashed lines from the object located a distance D₂ from the lens, pass through lens 12 and focused rays 18 then intersect at a distance L₂ where L₂ is greater than L₁ (L₂ > L₁). Therefore, the focal plane, which is a plane on which a lens forms a sharp image when correctly focused has moved a distance D, where D is equal to L₂- L₁.

In contrast to the conventional imaging systems previously described which shift the focal plane by physically moving lens 12, the present invention moves a sensor 20a, which is shown as normally located at the focal length of the lens, back to a position D away from lens 12, the position here identified as at 20b. In the preferred embodiment, the sensor is a CCD, but it can also be any of various other electronic imaging sensors such as charge injection devices (CID).

Figre 2 shows an electronic still camera of the invention where an electronic still camera 30 uses a ranging system 36 to determine the distance to a subject. Ranging system 36 transmits an electronic signal 32 aimed at the subject and measures an amount of the reflected signal 34 reflected from the subject. In the preferred embodiment ranging system 36 is a calibrated sonar ranging system such as that shown in commonly assigned U.S. Patent No. 4,490,814, issued to Edwin K. Shenk on December 25, 1984.

The ranging system then passes a signal representative of a distance to the object to a microprocessor 38. Microprocessor 38 then looks up in a table stored in a memory inherent to the microprocessor 38 what the proper location of the focal plane is given that distance. Upon determining the proper distance of the focal plane, the microprocessor signals a motor 40 to mechanically adjust the sensor 20.

The adjustment is performed using a mechanical interface 42 which translates between a motor 40 and sensor 20 via an actuation device 44. Actuation device 44 mechanically adjusts a location of the sensor 20 so as to follow the changing focal plane. Thus, image-bearing light 46 reflected from the subject can pass through optics 48 and be incident upon sensor 20 in a proper focal plane so as to achieve a focused image. Sensor 20 can then pass electronic signals representative of image 50 to associated internal electronics of electronic still camera 30.

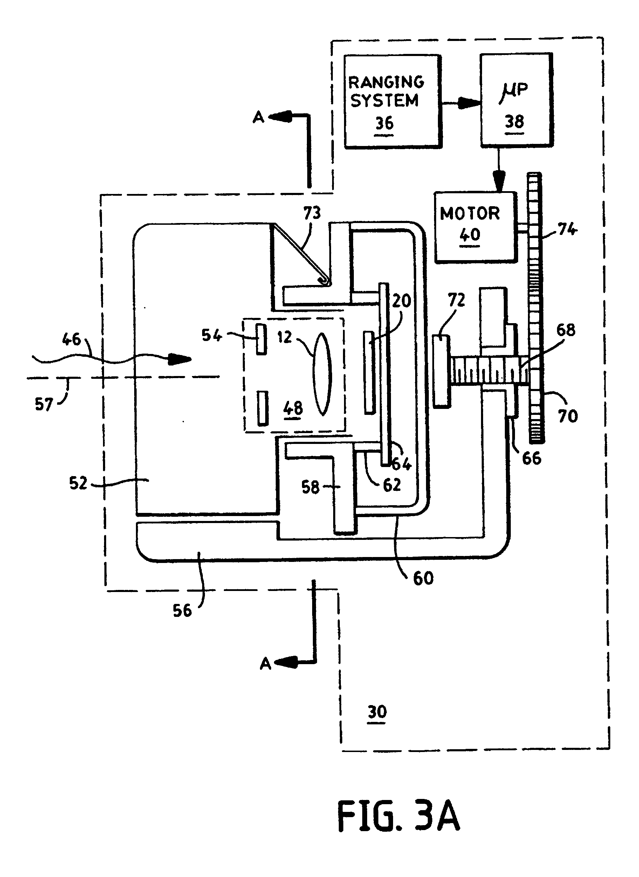

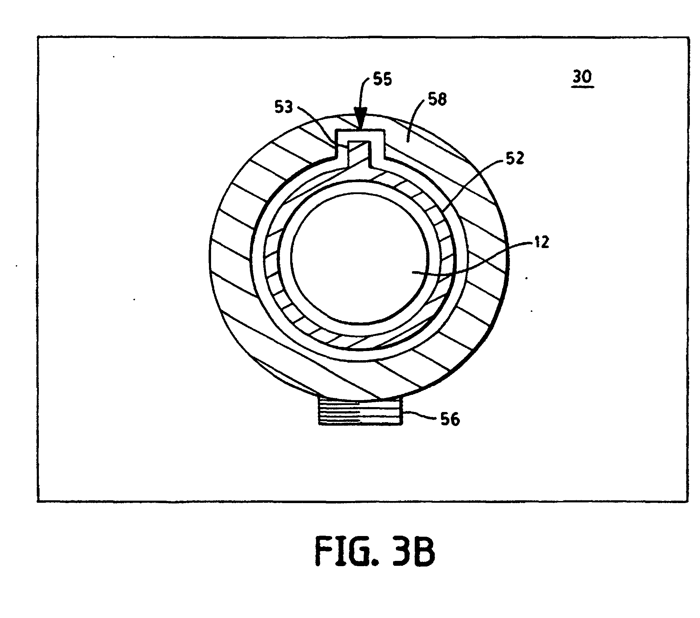

Figs. 3A and 3B illustrate a particular embodiment of the electronic still camera 30 showing the mechanical design of such a system. As previously described, image-bearing light 46 reflected from a subject comes into an optical system 48 of electronic still camera 30. In the preferred embodiment, electronic still camera 30 encloses optics 48 in an optical housing 52 which is made to receive interchangeable lens systems (not shown). Because electronic still camera 30 adjusts focus internally, the interchangeable lens systems simply need to be statically mounted lenses having the properties desired by the photographer.

Optical system 48 includes a lens 12 or lens system and a shutter 54. When shutter 54 opens, an aperture is created allowing the image bearing light 46 to pass through, thus impinging upon sensor 20. Optical housing 52 is held on a frame 56 which passes into the internals of electronic still camera 30 and is, in turn, mechanically connected to the housing of electronic still camera 30.

A sensor housing 60 is connected to an alignment cylinder 58 which has a close sliding fit with optical housing 52. Alignment cylinder 58 is disposed over optical housing 52 such that reciprocal motion is enabled. Alignment of alignment cylinder 58 is accomplished using an alignment pin 53 extending from optical housing 52 into a groove 55 in alignment cylinder 58; thus, preventing rotation of sensor housing 60 about optical axis 57.

Sensor housing 60 is in mechanical contact with a wear plate 72. Wear plate 72 is mechanically secured to sensor housing 60 by an adhesive in the preferred embodiment. One skilled in the art will realize, though, that other means of attachment can be used such as welding, screws, etc.

Wear plate 72 is secured to a back portion of sensor housing 60 such that force applied to wear plate 72 pushes sensor housing 60 forward with respect to optical system 48. Opposing this force is a spring 73 which elastically biases the sensor housing away from optical system 48. Thus, as a lead screw 68 is driven backward, away from lens 12, spring 73 moves sensor housing likewise away from lens 12.

Wear plate 72 is driven by lead screw 68, which passes through a threaded coupling 66 in frame 56. As lead screw 68 is rotated in a clockwise direction, wear plate 72 is driven inward, forcing sensor housing 60 to move forward. Alignment cylinder 58 then rides along optical housing 52, moving sensor 20 closer to lens 12.

As lead screw 68 is rotated counterclockwise, the force exerted on sensor housing 60 is relieved and spring 73 pushes alignment cylinder 58, and thus sensor housing 60, away from lens 12. Sensor housing 60 could alternatively be directly driven by the counter clockwise rotation of lead screw 68 without a necessity of spring 73 but this would require additional mechanical attachment to sensor housing 60.

Lead screw 68 is directly, mechanically connected to a first gear 70 to effectuate such rotation. First gear 70 is mechanically interconnected with a second gear 74, driven by motor 40. Thus, as ranging system 36 passes the distance to the object to microprocessor 38, and microprocessor 38 determines a proper focal plane position, microprocessor 38 can then electronically signal motor 40 to rotate lead screw 68 forward or backward to a proper focal plane position of sensor 20.

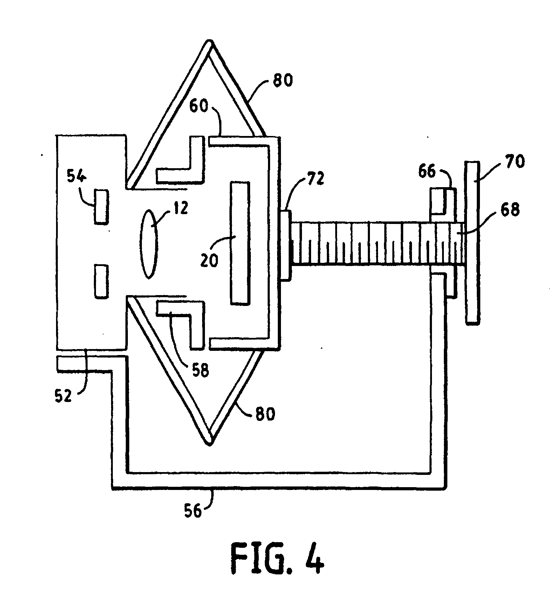

Fig. 4 illustrates an alternative embodiment of the sensor movement mechanism of Figs. 3A and 3B. Image-bearing light 46 reflected from a subject passes through shutter 54 into lens 12. When shutter 54 opens, an aperture is created allowing image bearing light 46 to pass through onto sensor 20. The optical housing is held on a frame 56 which is mechanically connected to the housing of electronic still camera 30.

Wear plate 72 is secured to a back portion of sensor housing 60 such that force applied to the wear plate 72 pushes sensor housing 60 forward with respect to optical system 48. Alignment of the sensor is accomplished by using a set of two or more flexures 80 that are mechanically connected to sensor housing 60 and to optical housing 52. Flexures 80 allow sensor housing 60 to move forward and backward with respect to optical system 48 in response to rotation of lead screw 68 while limiting rotational motion, thus preventing rotation of sensor housing 60 about optical axis 57.

Further, flexures 80 have an outward bias that places a substantially constant outward force on sensor housing 60 pushing sensor 20 away from lens 12. Thus, as lead screw 68 is driven backward, away from lens 12, flexures 80 move sensor housing 60 away from lens 12.

Wear plate 72 is driven by lead screw 68, which passes through a threaded coupling 66 in frame 56. As lead screw 68 is rotated in a clockwise direction, wear plate 72 is driven inward, forcing sensor housing 60 to move forward. Alignment cylinder 58 then rides along optical housing 52 and moves sensor 20 closer to lens 12. As lead screw 68 is rotated counterclockwise, the force exerted on sensor housing 60 is relieved, and flexures 80 push alignment cylinder 58 and, thus sensor housing 60, away from lens 12. Lead screw 68 is mechanically connected to a first gear 70 to effectuate such rotation. As previously described, a motor such as a stepper motor is then used to drive first gear 70.

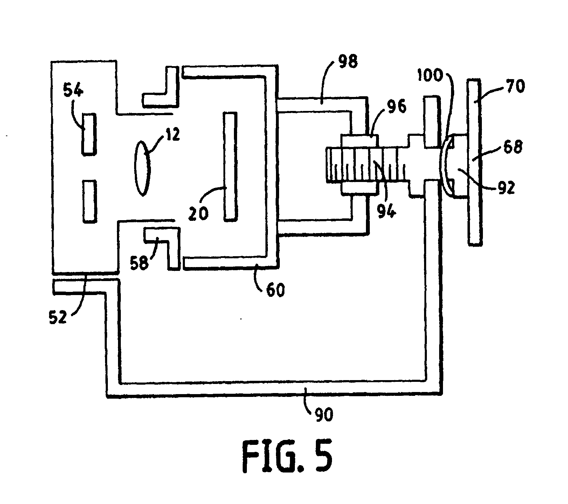

Fig. 5 illustrates yet another embodiment of the sensor movement mechanism of Fig 3A and 3B. Image-bearing light 46 reflected from a subject comes through shutter 54 into lens 12. When shutter 54 opens, an aperture is created allowing image bearing light 46 to pass through onto sensor 20. The optical housing is held on a frame 90 which is mechanically connected to the housing of electronic still camera 30. A sensor housing 60 is connected to an alignment cylinder 58 which has a close sliding fit with optical housing 52. Alignment cylinder 58 is disposed over optical housing 52 such that reciprocal motion is enabled.

Sensor housing 60 is mechanically connected to a follower assembly 98. Follower assembly 98 moves sensor housing 60 forward and backward with respect to optical system 48 in response to rotation of lead screw 94. Lead screw 94 is secured in frame 90 at a portion of lead screw 94 that forms a journal bearing 92. This allows lead screw 68 to rotate freely with respect to frame 90. A load washer 100 is also used which biases journal bearing 92 such that linear motion with respect to frame 90 is limited. Since, in the preferred embodiment, one stop corresponds to linear motion of sensor 20 of 9,525 µm (0.000375 inches), load washer 100 places a substantially constant load on journal bearing 92 to limit unwanted linear motion.

As lead screw 94 is rotated in a clockwise direction, a nut 96 integral with the follower assembly 98 is driven linearly outward forcing sensor housing 60 to move away from lens 12. Alignment cylinder 58 then rides along optical housing 52 and moves sensor 20 away from lens 12. Likewise, as lead screw 94 is rotated counterclockwise, nut 96 is driven linearly inward forcing the follower assembly to move sensor housing 60 closer to lens 12. Alignment cylinder 58 then rides along optical housing 52 to move sensor 20 closer to lens 12.

An alignment pin (not shown) similar to that previously described is again used to assist in alignment of sensor housing 60 and to inhibit rotation of the sensor housing with respect to the optical axis. As previously described, lead screw 68 is directly, mechanically connected to a first gear 70 to effectuate such rotation.

The invention may be embodied in other specific forms without departing from the scope as claimed. The present embodiments are, therefore, to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. An electronic camera (30) comprising
- a sensor (20) which converts image-bearing light (46) into signals (50) representative of a subject;
- an optical system (12, 48) for focusing the image-bearing light (46) reflected from the subject along an optical path onto said sensor (20);
- a ranging system (36) for producing a ranging signal representative of the distance from the subject to the sensor (20) ;
- adjustment means (42) for moving said sensor (20) along the optical path (57) relative to the optical system such that focus of the subject is changed;
**characterized in that** a micro processor (38) with a look-up table is provided between said ranging system (36) and said adjustment means (42) whereby said ranging system (36) passes a signal representative of a distance to the object to said micro processor (38) which then looks up in said table stored in a memory inherent to the micro processor (38) what the proper location of the focal plane is given said distance and upon determining the proper distance of the focal plane the micro processor (38) signals said adjustment means to mechanically adjust said sensor (20) accordingly.

2. The electronic still camera (30) according to claim 1 wherein said adjustment means comprises a lead screw (68; 94) disposed along an axis substantially parallel to the optical path, (57) such that rotation of said lead screw moves said sensor (20).

3. The electronic still camera (30) according to claim 2 wherein rotation of said lead screw (68; 94) in a first direction applies a drive force to move said sensor (20) in the direction of said optical system, (48) and rotation of the lead screw in a second direction removes the drive force from the sensor (20).

4. The electronic still camera (30) according to claim 3, said camera further comprising elastic means (73, 80) in mechanical communication with said sensor (20) for biasing said sensor (20) away from said optical system (48) such that rotation of said lead screw in the second direction causes said elastic means to move said sensor away from said optical system.

5. The electronic still camera (30) according to claim 2 further comprising alignment means (53, 55, 58) in mechanical communication with said sensor (20) for maintaining alignment of said sensor with the optical path (57).

6. The electronic still camera (30) according to claim 5 wherein said alignment means (53, 55, 58) maintains alignment of said sensor with the optical path (57) by limiting rotational motion of said sensor (20) with respect to the optical path.

7. The electronic still camera (30) according to claim 6 wherein said sensor is disposed in a sensor housing (60) having an axial groove (55), and said alignment means comprises an alignement pin (53) protruding from said optical system into said axial groove (55) to maintain the alignment of said sensor (20).

8. The electronic still camera (30) according to claim 5 wherein said alignment means is a set of flexures mechanically interconnecting said optical system (48) and a housing of said sensor to restrict rotational motion of said sensor.

9. The electronic still camera (30) according to claim 8 wherein said flexures are elastically biased to move said sensor (20) away from said optical system (48).

10. The electronic still camera (30) according to claim 1 further comprising a motor (40) in mechanical communication with said adjustment means (42) reversibly actuatable in a first direction and a second direction, actuation of said motor in said first direction causing said motor to drive said adjustment means such that said sensor (20) moves toward said optical system, and actuation of said motor in the second direction causing said motor to drive said adjustment means such that said sensor (20) moves away from said optical system (48).

11. A focusing system for use in an apparatus having optics (12) through which image-bearing light pass to expose an image of a subject onto a photosensitive medium which is disposed within a medium housing, comprising:
ranging means (36) for determining a range to the subject;
processing means (38) in electrical communication with said ranging means and comprising look-up table means for determining a position of a focal plane relative to said optics (12) given the range to the subject; and
adjustment means (42) in electrical communication with said processing means (38) for moving said photosensitive medium to the focal plane in response to a signal from said processing means.

12. The focusing system of claim 11 wherein said adjustment means (42) comprises:
a motor (40) in electrical communication with said processing means (38); and
a lead screw (68, 94) in mechanical communication with said medium housing such that rotation of said lead screw in a first direction applies a drive force to drive said medium housing toward said optics, and rotation of said lead screw in a second direction removes the drive force from said medium housing.

13. The focusing system according to claim 12 wherein actuation of said motor (40) in said second direction causing said motor to drive said adjustment means such that said medium moves away from said optical system.

14. The focusing system according to claim 12 further comprising elastic means in mechanical communication with said medium housing for biasing said medium housing away from said optics such that rotation of said lead screw in said second direction causes said elastic means to move said medium housing away from said optics.

15. The focusing system according to claim 14 further comprising alignment means in mechanical communication with said medium housing for maintaining alignment of said photosensitive medium with said optics (12).

16. A method of focusing an electronic still camera (30) which uses a sensor (20) to capture image-bearing light reflected from a subject through camera optics (12), said method comprising the steps of:
determining a range to the subject;
looking in a table stored in a memory inherent to a microprocessor (38) to determine the proper location of the local plane at said range to the subject and
moving said sensor 20 to the focal plane.

17. The method according to claim 16 wherein said step of moving said sensor (20) to the focal plane is performed by actuating a lead screw that mechanically moves said sensor relative to said camera optics (57).

## Patentansprüche

1. Digitalkamera (30) mit den folgenden Merkmalen:
- ein Sensor (20) wandelt die bildführenden Lichtstrahlen (46) in Signale (50) um, die repräsentativ sind für einen Aufnahmegegenstand;
- ein optisches System (12, 48) fokussiert die bildführenden Lichtstrahlen (46), die vom Aufnahmegegenstand reflektiert wurden, längs des optischen Pfades auf den Sensor (20);
- ein Entfernungsmeßsystem (36) erzeugt ein Entfernungsmeßsignal, welches repräsentativ ist für den Abstand zwischen Aufnahmegegenstand und Sensor (20);
- Stellmittel (42) zur Bewegung des Sensors (20) längs des optischen Pfades (57) relativ zu dem optischen System derart, daß die Scharfeinstellung des Aufnahmegegenstands geändert wird;
- **dadurch gekennzeichnet, daß** ein Mikroprozessor (38) mit einer Nachschlagtabelle zwischen dem Entfernungsmeßsystem (36) und den Einstellmitteln (42) vorgesehen ist, wobei das Entfernungsmeßsystem (36) dem Mikroprozessor (38) ein Signal liefert, das repräsentativ ist für die Gegenstandsentfemung und der Mikroprozessor in der im Speicher des Mikroprozessors (38) gespeicherten Tabelle feststellt, wo die richtige Stelle der Bildebene bei dieser Gegenstandsentfernung zu liegen hat und nach Bestimmung des richtigen Abstands der Bildebene signalisiert der Mikroprozessor (38) den Einstellmitteln den Sensor (20) mechanisch entsprechend einzustellen.

2. Digitalkamera (30) nach Anspruch 1, bei welcher die Einstellmittel eine Führungsspindel (68, 94) aufweisen, die längs einer Achse im wesentlichen parallel zum optischen Pfad (57) verläuft und derart angeordnet ist, daß die Drehung der Führungsspindel den Sensor (20) bewegt.

3. Digitalkamera (30) nach Anspruch 2, bei welcher die Drehung der Führungsspindel (68, 94) in einer ersten Richtung eine Antriebskraft erzeugt, die den Sensor (20) in Richtung auf das optische System (48) bewegt, während eine Drehung der Führungsspindel in einer zweiten Richtung die Antriebskraft vom Sensor (20) abnimmt.

4. Digitalkamera (30) nach Anspruch 3, welche weiter elastische Mittel (73, 80) aufweist, die in mechanischer Verbindung mit dem Sensor (20) stehen, um den Sensor (20) vom optischen System (48) weg vorzuspannen, derart daß eine Drehung der Führungsspindel in der zweiten Richtung bewirkt, daß die elastischen Mittel den Sensor von dem optischen System wegbewegen.

5. Digitalkamera (30) nach Anspruch 2, welche außerdem Richtmittel (53, 55, 58) in mechanischer Verbindung mit dem Sensor (20) aufweist, um den Sensor auf den optischen Pfad (57) ausgerichtet zu halten.

6. Digitalkamera (30) nach Anspruch 5, bei welcher die Ausrichtmittel (53, 55, 58) die Ausrichtung des Sensors gegenüber dem optischen Pfad (57) aufrechterhalten, indem die Drehbewegung des Sensors (20) gegenüber dem optischen Pfad begrenzt wird.

7. Digitalkamera (30) nach Anspruch 6, bei welcher der Sensor in einem Sensorgehäuse (60) untergebracht ist, welches eine Axialnut (55) aufweist, und die Richtmittel einen Richtstift (53) aufweisen, der vom optischen System in die Axialnut (55) vorsteht, um den Sensor (20) ausgerichtet zu halten.

8. Digitalkamera (30) nach Anspruch 5, bei welcher die Richtmittel eine Gruppe von Flexuren aufweisen, die das optische System (48) mit dem Sensorgehäuse mechanisch verbinden, um die Drehbewegung des Sensors zu begrenzen.

9. Digitalkamera (30) nach Anspruch 8, bei welcher die Flexuren elastisch vorgespannt sind, um den Sensor (20) vom optischen System (48) wegzubewegen.

10. Digitalkamera (30) nach Anspruch 1, welche außerdem einen Motor (40) in mechanischer Verbindung mit den Einstellmitteln (42) aufweist, der reversibel in einer ersten Richtung und einer zweiten Richtung drehbar ist, wobei die Betätigung des Motors in der ersten Richtung bewirkt, daß der Motor die Einstellmittel so antreibt, daß sich der Sensor (20) nach dem optischen System hin bewegt, während die Drehung des Motors in der zweiten Richtung bewirkt, daß der Motor die Einstellmittel so antreibt, daß der Sensor (20) sich vom optischen System (48) wegbewegt.

11. Scharfeinstellsystem zur Benutzung in Verbindung mit einer Vorrichtung, die eine Optik (12) aufweist, durch die bildführende Lichtstrahlen hindurchtreten, um ein Bild eines Aufnahmegegenstands auf einem lichtempfindlichen Medium abzubilden, das in einem Gehäuse angeordnet ist, wobei das System die folgenden Merkmale aufweist:
- ein Entfemungsmeßsystem (36) zur Bestimmung der Gegenstandsweite;
- Verarbeitungsmittel (38) in elektrischer Verbindung mit den Entfernungsmeßmitteln und eine Nachschlagtabelle zur Bestimmung einer Lage der Bildebene relativ zur Optik (12), um die Bildweite einzustellen und
- Einstellmittel (42) in elektrischer Verbindung mit den Verarbeitungsmitteln (38) zur Bewegung des lichtempfindlichen Mediums nach der Bildebene gemäß dem Signal, welches von den Verarbeitungsmitteln ausgeht.

12. Fokussierungssystem nach Anspruch 11, bei welchem die Einstellmittel (42) folgende Teile umfassen:
- einen Motor (40) in elektrischer Verbindung mit den Verarbeitungsmittel (38) und
- eine Führungsspindel (68, 94) in mechanischer Verbindung mit dem Gehäuse des lichtempfindlichen Mediums, derart daß eine Drehung der Führungsspindel in einer ersten Richtung eine Antriebskraft ausübt, um das Gehäuse des lichtempfindlichen Mediums nach der Optik hin zu verschieben, während eine Drehung der Führungsspindel in einer zweiten Richtung den Antrieb von dem Gehäuse des lichtempfindlichen Mediums abschaltet.

13. Scharfeinstellsystem nach Anspruch 12, bei welchem eine Drehung des Motors (40) in der zweiten Richtung den Motor veranlaßt, die Einstellmittel so zu drehen, daß sich das Medium vom optischen System wegbewegt.

14. Scharfeinstellsystem nach Anspruch 12, welches außerdem elastische Mittel in mechanischer Verbindung mit dem Mediumgehäuse aufweist, um das Mediumgehäuse von der Optik weg derart vorzuspannen, daß eine Drehung der Führungsspindel in der zweiten Richtung die elastischen Mittel veranlaßt, das Mediumgehäuse von der Optik wegzubewegen.

15. Scharfeinstellsystem nach Anspruch 14, wobei weiter Richtmittel in mechanischer Verbindung mit dem Mediumgehäuse vorgesehen sind, um eine Ausrichtung des lichtempfindlichen Mediums mit der Optik (12) aufrechtzuerhalten.

16. Verfahren zum Scharfeinstellen einer Digitalkamera (30), die einen Sensor (20) benutzt, um bildführende Lichtstrahlen aufzufangen, die von einem Aufnahmegegenstand durch ein Kameraobjektiv (12) abgebildet werden, wobei das Verfahren die folgenden Schritte aufweist:
- es wird die Aufnahmeentfernung festgestellt;
- es wird aus einer in einem Speicher eines Mikroprozessors (38) gespeicherten Tabelle ein Wert entnommen, um die richtige Stelle der Bildebene bei dieser Aufnahmeentfernung festzustellen;
- und es wird der Sensor (20) in die Bildebene bewegt.

17. Verfahren nach Anspruch 16, bei welchem der Schritt der Bewegung des Sensors (20) in die Bildebene dadurch bewirkt wird, daß eine Führungsspindel betätigt wird, die mechanisch den Sensor relativ zur Kameraoptik (57) bewegt.

## Revendications

1. Appareil photo électronique (30) comprenant :
- un capteur (20) qui convertit de la lumière (46) portant une image en signaux (50) représentatifs d'un sujet ;
- un système optique (12, 48) pour focaliser la lumière (46) portant une image réfléchie par le sujet le long d'un chemin optique sur ledit capteur (20) ;
- un système de télémétrie (36) pour produire un signal de télémétrie représentatif de la distance séparant le capteur (20) du sujet ;
- un moyen de réglage (42) pour déplacer ledit capteur (20) le long du chemin optique (57) par rapport au système optique de telle manière que la mise au point du sujet est modifiée ;
**caractérisé en ce qu'**un microprocesseur (38) pourvu d'une table à consulter est placé entre ledit système de télémétrie (36) et ledit moyen de réglage (42) grâce à quoi ledit système de télémétrie (36) transmet un signal représentatif d'une distance à l'objet audit microprocesseur (38) qui recherche ensuite dans ladite table stockée dans une mémoire propre au microprocesseur (38) quel est le bon emplacement du plan focal étant donnée ladite distance et après détermination de la bonne distance du plan focal le microprocesseur (38) signale audit moyen de réglage d'ajuster mécaniquement ledit capteur (20) en conséquence.

2. Appareil photo électronique (30) selon la revendication 1, dans lequel ledit moyen de réglage comprend une vis-mère (68 ; 94) disposée le long d'un axe substantiellement parallèle au chemin optique (57), de telle sorte que la rotation de ladite vis-mère déplace ledit capteur (20).

3. Appareil photo électronique (30) selon la revendication 2, dans lequel la rotation de ladite vis-mère (68 ; 94) dans un premier sens applique une force d'entraînement pour déplacer ledit capteur (20) dans la direction dudit système optique (48), et la rotation de la vis-mère dans un deuxième sens retire la force d'entraînement du capteur (20).

4. Appareil photo électronique (30) selon la revendication 3, ledit appareil photo comprenant en outre un moyen élastique (73, 80) en communication mécanique avec ledit capteur (20) pour solliciter ledit capteur (20) en l'éloignant dudit système optique (48) de telle manière que la rotation de ladite vis-mère dans le deuxième sens oblige ledit moyen élastique à éloigner ledit capteur dudit système optique.

5. Appareil photo électronique (30) selon la revendication 2, comprenant en outre un moyen d'alignement (53, 55, 58) en communication mécanique avec ledit capteur (20) pour maintenir l'alignement dudit capteur avec le chemin optique (57).

6. Appareil photo électronique (30) selon la revendication 5, dans lequel ledit moyen d'alignement (53, 55, 58) maintient l'alignement dudit capteur avec le chemin optique (57) en limitant le mouvement de rotation dudit capteur (20) par rapport au chemin optique.

7. Appareil photo électronique (30) selon la revendication 6, dans lequel ledit capteur est placé dans un boîtier (60) de capteur comportant une rainure axiale (55), et ledit moyen d'alignement comprend un axe d'alignement (53) qui fait saillie dans ladite rainure axiale (55) depuis ledit système optique pour maintenir l'alignement dudit capteur (20).

8. Appareil photo électronique (30) selon la revendication 5, dans lequel ledit moyen d'alignement est constitué d'un jeu de joints flexibles reliant de manière mécanique ledit système optique (48) et un boîtier dudit capteur pour restreindre le mouvement de rotation dudit capteur.

9. Appareil photo électronique (30) selon la revendication 8, dans lequel lesdits joints flexibles sont sollicités de manière élastique pour éloigner ledit capteur (20) dudit système optique (48).

10. Appareil photo électronique (30) selon la revendication 1, comprenant en outre un moteur (40) en communication mécanique avec ledit moyen de réglage (42) pouvant être actionné de manière réversible dans un premier sens et dans un deuxième sens, l'actionnement dudit moteur dans ledit premier sens obligeant ledit moteur à entraîner ledit moyen de réglage de telle manière que ledit capteur (20) se rapproche dudit système optique, et l'actionnement dudit moteur dans le deuxième sens obligeant ledit moteur à entraîner ledit moyen de réglage de telle manière que ledit capteur (20) s'éloigne dudit système optique (48).

11. Système de focalisation destiné à être utilisé dans un appareil comportant un élément optique (12) par lequel passe de la lumière portant une image pour exposer une image d'un sujet sur un support photosensible qui est placé dans un boîtier pour support, comprenant :
un moyen de télémétrie (36) pour déterminer une distance au sujet ;
un moyen de traitement (38) en communication électrique avec ledit moyen de télémétrie et comprenant un moyen de table à consulter pour déterminer une position d'un plan focal par rapport audit élément optique (12) en fonction de la distance au sujet ; et
un moyen de réglage (42) en communication électrique avec ledit moyen de traitement (38) pour déplacer ledit support photosensible jusqu'au plan focal en réponse à un signal provenant dudit moyen de traitement.

12. Système de focalisation selon la revendication 11 dans lequel ledit moyen de réglage (42) comprend :
un moteur (40) en communication électrique avec ledit moyen de traitement (38), et
une vis-mère (68 ; 94) en communication mécanique avec ledit boîtier pour support de telle manière que la rotation de ladite vis-mère dans un premier sens applique une force d'entraînement pour entraîner ledit boîtier pour support vers ledit élément optique, et la rotation de ladite vis-mère dans un deuxième sens supprime la force d'entraînement audit boîtier pour support.

13. Système de focalisation selon la revendication 12 dans lequel l'actionnement dudit moteur (40) dans ledit deuxième sens obligeant ledit moteur à entraîner ledit moyen de réglage de telle manière que ledit support s'éloigne dudit système optique.

14. Système de focalisation selon la revendication 12 comprenant en outre un moyen élastique en communication mécanique avec ledit boîtier pour support pour éloigner ledit boîtier pour support dudit élément optique de telle manière que la rotation de ladite vis-mère dans ledit deuxième sens oblige ledit moyen élastique à éloigner ledit boîtier pour support dudit élément optique.

15. Système de focalisation selon la revendication 14 comprenant en outre un moyen d'alignement en communication mécanique avec ledit boîtier de support pour maintenir l'alignement dudit support photosensible avec ledit élément optique (12).

16. Procédé de focalisation d'un appareil photo électronique (30) qui utilise un capteur (20) pour capturer de la lumière portant une image réfléchie par un sujet à travers un élément optique (12) d'appareil photo, ledit procédé comprenant les étapes consistant à :
déterminer la distance au sujet ;
chercher dans une table stockée dans une mémoire propre à un microprocesseur (38) pour déterminer le bon emplacement du plan focal à ladite distance au sujet et
déplacer ledit capteur (20) jusqu'au plan focal.

17. Procédé selon la revendication 16 dans lequel ladite étape de déplacement dudit capteur (20) jusqu'au plan focal est effectuée en actionnant une vis-mère qui déplace de manière mécanique ledit capteur par rapport audit élément optique (57) d'appareil photo.
